# EUROPÄISCHE PATENTANMELDUNG

(11) **EP 0 695 767 A1**
(43) Veröffentlichungstag der Anmeldung: **07.02.1996**
(21) Anmeldenummer: 95111155.8
(22) Anmeldetag: 17.07.1995
(51) Int. Cl.: C08F 210/12, C08F 2/14, C08F 4/00

(54) **Herstellung von C4-C16-Alkylkautschuken nach dem Slurry-Verfahren**

(30) Priorität: 28.07.1994 DE 4426756
(71) Anmelder: BAYER AG, D-51368 Leverkusen (DE)
(72) Erfinder: Baade, Wolfgang, Dr., D-51519 Odenthal (DE); Langstein, Gerhard, Dr., D-51515 Kürten (DE); Puskas, Judit, Dr., Corunna, NON 1G0 Ontario (CA)

(57) **Zusammenfassung**

Die Herstellung von C₄-C₁₆-Alkylkautschuken nach dem Slurry-Verfahren durch Copolymerisation von Isoolefinen mit 4 bis 16 Kohlenstoffatomen mit konjugierten Diolefinen mit 4 bis 6 Kohlenstoffatomen und/oder kationisch polymerisierbaren, ein- oder mehrfach ungesättigten oganischen Verbindungen mit 4 bis 16 Kohlenstoffatomen in Gegenwart von Methylchlorid und in Gegenwart von Friedel-Crafts-Katalysatoren gelingt in besonders vorteilhafter Weise, indem man die Copolymerisation in Anwesenheit von linearen, verzweigten und/oder cyclischen Alkanen durchführt.

## Beschreibung

Die vorliegende Erfindung betrifft ein Verfahren zur Herstellung von C₄-C₁₆-Alkylkautschuken nach dem Slurry-Verfahren durch Copolymerisation von Isoolefinen mit 4 bis 16 Kohlenstoffatomen mit konjugierten Diolefinen mit 4 bis 6 Kohlenstoffatomen und/oder kationisch polymerisierbaren, ein- oder mehrfach ungesättigten organischen Verbindungen mit 4 bis 16 Kohlenstoffatomen in Gegenwart von Methylchlorid und in Gegenwart von Friedel-Crafts-Katalysatoren.

Butylkautschuk wird heute standardmäßig durch Tieftemperaturpolymerisation von Isobuten mit Isopren nach dem sog. Slurry-Verfahren in Gegenwart von Aluminiumtrichlorid als Katalysator und in Gegenwart von Methylchlorid als kontinuierlicher Phase bei -90 bis -100°C hergestellt (siehe Ullmann's Encyclopedia of Industrial Chemistry, Vol. A 23, 1993). Als Vorteil dieses Verfahrens erweist sich ein hoher Feststoffgehalt bei gleichzeitig geringer Viskosität des Slurrysystems. Nachteilig bei diesem im technischen Maßstab betriebenem Verfahren ist das Auftreten von Ablagerungen an den Reaktorwänden und Kühlvorrichtungen, wodurch die Abführung der Polymerisationswärme stark behindert wird. Dies führt dazu, daß der kontinuierlich betriebene Reaktor schon nach kurzer Standzeit zur Reinigung außer Betrieb genommen werden muß.

Weiterhin ist es möglich, Butylkautschuk durch Lösungspolymerisation herzustellen (z.B. DE-OS 23 28 541). Bei diesem Lösungsverfahren tritt praktisch keine Belagsbildung an den Reaktorwänden und Kühlvorrichtungen auf. Beim Lösungsverfahren tritt jedoch schon bei geringer Polymerkonzentration eine sehr hohe Viskosität der Reaktionslösung auf, was sich nachteilig auf die Durchmischung und die Wärmeabfuhr auswirkt.

Um die Belagsbildung an den Reaktorwänden zu verhindern, hat man versucht, die Polymerisation in Gegenwart von geringen Mengen an Isobuten-Styrol-Blockcopolymeren durchzuführen (US 4 252 710; US 4 358 560 sowie US 4 474 924). Der Zusatz von geringen Mengen an Isobuten-Styrol-Blockcopolymeren wirkt sich jedoch negativ auf die Produkt- und Verarbeitungseigenschaften der auf diese Weise hergestellten Butylkautschuke aus.

Aufgabe der vorliegenden Erfindung ist es nun, ein Verfahren zur Herstellung von C₄-C₁₆-Alkylkautschuken, insbesondere Butylkautschuk, bereitzustellen, bei dem die im Slurry-Verfahren geschilderten Nachteile der Belagsbildung an den Reaktorwänden und Kühlvorrichtungen in erheblichem Maße verringert werden und bei dem gleichzeitig das Slurry-System mit seiner niedrigen Viskosität erhalten bleibt. Weiterhin war es Aufgabe des erfindungsgemäßen Verfahrens, daß die nach dem Verfahren hergestellten Produkte die gleichen Produkteigenschaften aufweisen wie die nach dem bekannten Standardverfahren hergestellten Butylkautschuke.

Gegenstand der vorliegenden Ergindung ist daher ein Verfahren zur Herstellung von C₄-C₁₆-Alkylkautschuken nach dem Slurry-Verfahren durch Copolymerisation von Isoolefinen mit 4 bis 16 Kohlenstoffatomen mit konjugierten Diolefinen mit 4 bis 6 Kohlenstoffatomen und/oder kationisch polymerisierbaren, ein- oder mehrfach ungesättigten organischen Verbindungen mit 4 bis 16 Kohlenstoffatomen in Gegenwart von Methylchlorid und in Gegenwart von Friedel-Crafts-Katalysatoren bei Temperaturen von -70 bis -105°C und bei Drücken von 1 bis 10 bar, das dadurch gekennzeichnet ist, daß man die Copolymerisation in Anwesenheit von 1 bis 20 Gew.-%, bezogen auf die kontinuierliche Phase, an linearen, verzweigten und/oder cyclischen Alkanen mit 4 bis 8 Kohlenstoffatomen durchführt.

Als Isoolefine mit 4 bis 16, bevorzugt 4 bis 12 Kohlenstoffatomen können in das erfindungsgemäße Verfahren eingesetzt werden: Isobuten, 2-Methylbuten, 3-Methylbuten-1, 4-Methylpenten-1 und β-Pinen, bevorzugt Isobuten und 2-Methylbuten, besonders bevorzugt Isobuten.

Als konjugierte Diolefine mit 4 bis 6 Kohlenstoffatomen kommen für das erfindungsgemäße Verfahren in Frage: Butadien, Isopren, Piperylen, 2,3-Dimethylbutadien, 2,4-Dimethylpentadien-1,3, Cyclopentadien, Methylcyclopentadien und 1,3-Cyclohexadien, bevorzugt Butadien, Isopren, Piperylen und 2,3-Dimethylbutadien, besonders bevorzugt Isopren.

Als kationisch polymerisierbare, ein- oder mehrfach ungesättigte organische Verbindungen mit 4 bis 16, bevorzugt 4 bis 10 Kohlenstoffatomen sind für das erfindungsgemäße Verfahren geeignet: Styrol, p-Methylstyrol, Divinylbenzol und Dimethylfulven, bevorzugt Styrol, p-Methylstyrol und Divinylbenzol, besonders bevorzugt p-Methylstyrol und Divinylbenzol.

Bei dem erfindungsgemäßen Verfahren werden die genannten Isoolefine in einer Menge von 90 bis 99,5 Gew.-%, bevorzugt 95 bis 99,5 Gew.-%, eingesetzt. Die kationisch polymerisierbaren, ungesättigten organischen Verbindungen werden in einer Menge von 10 bis 0,5 Gew.-%, bevorzugt 5 bis 0,5 Gew.-%, bezogen auf die Summe aller Monomeren, dem erfindungsgemäßen Verfahren zugesetzt.

Wie bereits erwähnt, wird das erfindungsgemäße Verfahren in Gegenwart von Methylchlorid und in Gegenwart von Friedel-Crafts-Katalysatoren durchgeführt. Die eingesetzte Menge an Methylchlorid beträgt üblicherweise 60 bis 90 Gew.-%, bevorzugt 67 bis 80 Gew.-%, bezogen auf die Summe aus Methylchlorid, Alkanen und Monomeren.

Als Friedel-Crafts-Katalysatoren eignen sich für das erfindungsgemäße Verfahren insbesondere Aluminiumhalogenide, wie Aluminiumtrichlorid, Borhalogenide, wie Bortrichlorid, Titanhalogenide, wie Titantetrachlorid, oder Zinnhalogenide, wie Zinntetrachlorid. Weiterhin können als Friedel-Crafts-Katalysatoren alle bekannten von den oben genannten Halogeniden ableitbaren Alkyl-, Di- und Trialkylverbindungen mit 1 bis 15 Kohlenstoffatomen sowie Chlorwasserstoff oder Gemische aus oben genannten Katalysatoren eingesetzt werden. Genannt seien insbesondere: Dimethylaluminiumchlorid, Diethylaluminiumchlorid, Ethylaluminiumsesquichlorid, Ethylaluminiumdichlorid, Diisobutylaluminiumchlorid, Isobutylaluminiumdichlorid, Octylaluminiumdichlorid, bevorzugt Ethylaluminiumdichlorid und Octylaluminiumdichlorid.

Darüber hinaus können als Initiatoren alle Carbokationen erzeugenden Verbindungen des Typs R1, R2, R3, R4C in Kombination mit oben genannten Friedel-Crafts-Katalysatoren eingesetzt werden. Die Reste R1 bis R3 können dabei gesättigte und ungesättigte aliphatische Reste mit 1 bis 10, bevorzugt mit 1 bis 4 Kohlenstoffatomen sein, sowie aromatische Gruppen mit 6 bis 16, bevorzugt mit 6 bis 10 Kohlenstoffatomen. R4 kann für Halogen-, Alkoxy-, Pseudehalogen-, sowie Estergruppen mit aliphatischen und aromatischen Resten stehen. Als Reste R1 bis R3 werden insbesondere genannt: Methyl, Ethyl, Propyl, Butyl, Pentyl, Hexyl, Heptyl, Octyl, Phenyl und Benzyl.

Ganz besonders bevorzugt wird als Friedel-Crafts-Katalysator eingesetzt: Aluminiumtrichlorid.

Die genannten Carbokationen erzeugenden Verbindungen und die Friedel-Crafts-Katalysatoren sind bekannt und beispielsweise beschrieben in: J.P. Kennedy und B. Ivan, Carbocationic Macromolecular Engineering, 1992

Die Friedel-Crafts-Katalysatoren werden in Mengen von 0,008 bis 1, bevorzugt 0,01 bis 0,8 Gew.-%, bezogen auf die Summe der Monomeren eingesetzt.

Das erfindungsgemäße Verfahren wird bevorzugt bei Temperaturen von -85 bis --100°C sowie bei Drücken von 1 bis 5 bar durchgeführt.

Für das erfindungsgemäße Verfahren ist es entscheidend, daß die Copolymerisation in Anwesenheit von linearen, verzweigten und/oder cyclischen Alkanen durchgeführt wird. Als Alkane werden beispielsweise genannt: Pentane, Hexane, Cyclohexan und Heptane, ganz besonders bevorzugt i-Hexane und n-Hexan.

Die Menge an Alkanen beträgt bevorzugt 3 bis 13 Gew.-%, bezogen auf die kontinuierliche Phase. Als kontinuierliche Phase wird definitionsgemäß die Summe aus eingesetztem Methylchlorid, Alkan und Monomeren verstanden.

Das erfindungsgemäße Verfahren kann sowohl in kontinuierlicher als auch diskontinuierlicher Fahrweise durchgeführt werden.

Bei der diskontinuierlichen Fahrweise geht man beispielsweise so vor, daß man in einem gerührten, auf -90°C gekühlten Reaktionsgefäß die Monomeren in Methylchlorid vorlegt. Zum Starten der Reaktion wird dann der in Methylchlorid gelöste Katalysator injiziert. Danach wird die Kühlung verstärkt, um die freiwerdende Polymerisationswärme abführen zu können. Die Reaktion wird unter Schutzgas durchgeführt.

Bei der kontinuierlichen Fahrweise werden alle Reaktanden in eien gut durchmischten und auf -98°C bis -90°C gekühlten Reaktor gleichzeitig über Injektionslanzen eingefahren. Der Produktstrom wird am Überlauf abgezogen.

Die Aufarbeitung der erhaltenen Polymerisate erfolgt in der üblichen Art und Weise, z.B. durch Ausfällen in Methanol oder Wasser (neutral bis alkalisch) oder durch Strippen des Polymerslurry, d.h. Koagulation der Polymerteilchen mit Wasserdampf und Stearaten als Koagulationshilfsmittel. Im Produkt verbliebene Restmonomere werden durch Ausdampfen entfernt. Anschließend wird das Polymere vom Wasser mechanisch getrennt und getrocknet.

Zur detaillierten Beschreibung der vorliegenden Erfindung werden folgende Beispiele angeführt.

### Beispiele

### Beispiel 1

Zu einer auf -95°C gekühlten Mischung aus 127 g Methylchlorid, 7 g n-Hexan (99,9%), 60 g Isobuten und 1,6 g Isopren werden 3ml einer Lösung von 0,93 g Aluminiumtrichlorid in 125 ml Methylchlorid gegeben. Die Polymerisation startet unter Bildung eines stabilen, milchig weißen Slurries sofort nach Zugabe des Katalysators. Dabei trat, wie es bei Batchpolymerisationen häufiger der Fall ist, ein Temperaturanstieg von 23°C auf. Nach 18 s wird die Reaktion durch Zugabe von 5 ml Ethanol gestoppt. Der Umsatz betrug 86% der Theorie. Eine Ablagerung von polymeren Verbindungen an den Wänden des Reaktionsgefäßes war nahezu nicht vorhanden, trotz des beobachteten Temperaturanstieges, der im Normalfall die Bildung von Polymerbelägen erheblich verstärkt.

### Beispiel 2

Wiederholung von Beispiel 1 mit 115g Methylchlorid und 13,5 g n-Hexan unter ansonst gleichen Bedingungen. Die Polymerisation startete ebenfalls unter Bildung eines niedigviskosen, milchig weißen stabilen Slurries sofort nach Zugabe des Katalysators. Nach 19 s wurde die Reaktion durch Zugabe von 5 ml Ethanol gestoppt. Der Umsatz betrug 87 %. Im Gegensatz zu Vergleichsbeispiel ohne Zusatz von Hexan wurden keinerlei Beläge gefunden.

### Beispiel 3

Wiederholung von Beispiel 1 mit 121 g Methylchlorid und 8 g i-Hexan. Die Polymerisation startete sofort nach Zugabe von 3 ml einer Lösung von 1,50 g des Katalysators Octylaluminiumdichlorid in 125 ml Methylchlorid unter Bildung eines niedrigviskosen, leicht gelblichen Slurry. Nach 23 s wurde die Reaktion durch Zugabe von 5 ml Ethanol gestoppt. Der Umsatz betrug 83 % der Theorie. Eine Ablagerung von Polymer an Reaktorwänden, Thermoelement sowie Probekörpern aus verschiedenen Stählen (ASTM 1.4301 und ASTM 1.4306) war nahezu nicht vorhanden.

### Beispiel 4

Wiederholung von Beispiel 1 mit 121 g Methylchlorid und 18 g Hexan. Durch Zugabe von 3 ml einer Lösung von 0,91 g Aluminiumtrichlorid in 125 ml Methylchlorid startete die Reaktion sofort und gab einen niederviskosen, milchigweißen gelbstichigen Slurry. Nach 18 s wurde die Reaktion zur Zugabe von 5 ml Ethanol gestoppt. Der Umsatz betrug 79% der Theorie. Es wurde auf Stahlprobekörpern und an den Reaktorwänden keinerlei Ablagerung von Polymeren gefunden.

### Vergleichsbeispiel

Wiederholung von Beispiel 1 mit 128 g Methylchlorid ohne Zusatz von n-Hexan. Nach 25 s wurde die Reaktion durch Zugabe von 5 ml Ethanol gestoppt. Der Umsatz beträgt 87,5%. Es wurden starke, für die vorliegende Polymerisation übliche Wandbeläge gefunden mit einer Stärke von 3 bis 5 mm.

## Patentansprüche

1. Verfahren zur Herstellung von C₄-C₁₆-Alkylkautschuken nach dem Slurry-Verfahren durch Copolymerisation von Isoolefinen mit 4 bis 16 Kohlenstoffatomen mit konjugierten Diolefinen mit 4 bis 6 Kohlenstoffatomen und/oder kationisch polymerisierbaren, ein- oder mehrfach ungesättigten organischen Verbindungen mit 4 bis 16 Kohlenstoffatomen in Gegenwart von Methylchlorid und in Gegenwart von Friedel-Crafts-Katalysatoren bei Temperaturen von -70 bis -105°C und bei Drücken von 1 bis 10 bar, dadurch gekennzeichnet, daß man die Copolymerisation in Anwesenheit von 1 bis 20 Gew.-%, bezogen auf die kontinuierliche Phase, an linearen, verzweigten und/oder cyclischen Alkanen mit 4 bis 8 Kohlenstoffatomen durchführt.

2. Verfahren nach Anspruch 1, dadurch gekennzeichnet, daß man die Copolymerisation in Anwesenheit von 3 bis 13 Gew.-% Alkanen durchführt.

3. Verfahren nach Ansprüchen 1 und 2, dadurch gekennzeichnet, daß man die Copolymerisation in Anwesenheit von Pentanen, Hexanen, Cyclohexan und/oder Heptanen durchführt.

4. Verfahren nach Ansprüchen 1 bis 3, dadurch gekennzeichnet, daß man die Copolymerisation in Anwesenheit von iso-Hexanen und/oder n-Hexanen durchführt.
